# EUROPÄISCHE PATENTSCHRIFT

(11) **EP 1 664 224 B1**
(45) Veröffentlichungstag und Bekanntmachung des Hinweises auf die Patenterteilung: **21.05.2008**
(21) Anmeldenummer: 04764949.6
(22) Anmeldetag: 08.09.2004
(51) Int. Cl.: C09J 101/28, C08J 11/04

(54) **2-K-MONTAGEKLEBSTOFF MIT HOHER ANFANGSHAFTUNG**
TWO-COMPONENT STRUCTURAL ADHESIVE HAVING HIGH INITIAL ADHESION
ADHESIF POUR ASSEMBLAGE A DEUX COMPOSANTS PRESENTANT UNE ADHERENCE INITIALE ELEVEE

(30) Priorität: 17.09.2003 DE 10343090
(43) Veröffentlichungstag der Anmeldung: 07.06.2006
(73) Patentinhaber: Henkel Kommanditgesellschaft auf Aktien, 40589 Düsseldorf (DE)
(72) Erfinder: KÖPNICK, Friedhelm, 40229 Düsseldorf (DE); MAJOLO, Martin, 41812 Erkelenz (DE); BECK, Horst, 41470 Neuss (DE)
(86) Internationale Anmeldenummer: PCT/EP2004/010006
(87) Internationale Veröffentlichungsnummer: WO 2005/035682

(56) Entgegenhaltungen:
- DE-A- 10 146 056

## Beschreibung

Die vorliegende Erfindung betrifft einen wasserbasierten 2-Komponenten-Montageklebstoff mit hoher Anfangshaftung, wobei mindestens eine Komponente einen Anteil einer niedermolekularen, in Wasser dissoziierenden Verbindung enthält.

Der Einsatz von Klebstoffen bei der Fertigung industrieller Güter sowie im Heimwerkerbereich verdrängt in zunehmenden Maße mechanische Befestigungsmittel. Dies geschieht insbesondere dort, wo die Verbindung zweier Werkstücke nur moderaten mechanischen Belastungen ausgesetzt ist. Die sogenannten Montageklebstoffe zeichnen sich oft durch eine hohe Anfangshaftung aus, die es ihnen ermöglicht, auch relativ schwere Werkstücke schnell zu fixieren.

Heute werden zunehmend lösemittelbasierte Montageklebstoffe durch wasserbasierte Montageklebstoffe verdrängt. Die Hauptvorteile der wasserbasierten Klebstoffe gegenüber den lösemittelbasierten Klebstoffen bestehen in verbesserten Verarbeitungseigenschaften, erhöhter Alterungsbeständigkeit und nicht zuletzt dem Verzicht auf umweltschädliche und gesundheitsgefährdende Lösemittel.

Solche vorteilhaften wasserbasierten Montageklebstoffe müssen jedoch auch den Anforderungen hinsichtlich der Klebeleistung, insbesondere hinsichtlich der Anfangshaftung des Montageklebstoffs genügen. In der Regel müssen verklebte Werkstücke beim Einsatz von Montageklebstoffen in der Anfangsphase der Verklebung durch mechanische Fixierung in der gewünschten Stellung gehalten werden. Dieses Verfahren führt jedoch zu einem erhöhten Aufwand beim Einsatz von Montageklebstoffen und wird durch Verbraucher oft als störend empfunden. Eine solche Fixierung wäre jedoch dann überflüssig, wenn die Anfangshaftung der eingesetzten Montageklebstoffe einen ausreichend hohen Wert aufweisen würde.

Die Anfangshaftung der aus dem Stand der Technik bekannten wasserbasierten Montageklebstoffe wird oft durch den Einsatz von Verdickungsmitteln beeinflusst, die jedoch die Viskosität der Klebstoffe stark erhöhen. Diese hohe Viskosität erfordert entsprechend widerstandsfähige und leistungsstarke Rührgeräte, die in der Lage sind, solche hoch viskosen Produkte zuverlässig zu mischen. Die Leistungsstärke der Misch- und Rührgeräte für Klebstoffe setzen aber den bekannten Montageklebstoffen eine Grenze in Bezug auf ihre Viskosität und damit auch auf die Stärke der Anfangshaftung.

Darüber hinaus wird die maximale Viskosität jedoch auch durch die Verarbeitungseigenschaften solcher Klebstoffe nach oben hin begrenzt. Bereits der Austrag hochviskoser Klebstoffe aus einem entsprechenden Behälter, beispielsweise einer Tube oder einer Kartusche, kann durch eine zu hohe Viskosität eines Klebstoffs derart schwierig werden, dass der Anwender dies trotz einer gegebenenfalls guten Anfangshaftung als derart nachteilig empfindet, dass er sich anderen Produkten zuwendet.

Die DE 101 46 056 A beschreibt einen auf Wasser basierenden Klebstoff, der ein Polysaccharid, ein Styrolacrylat und ein in wasser dissoziierendes Salz enthält.

Die DE 691 10 403 T2 beschreibt wässrige Suspensionen nichtionischer Polymere in einem Salzmedium. Die beschriebenen Suspensionen enthaltenen beispielsweise Cellulosederivate als nichtionische Polymere sowie Natriumformiat als Salz, wobei die Suspensionen mindestens 28 Gew.-% Natriumformiat enthalten müssen. Derartige hohe Salzkonzentrationen sind jedoch für einen Einsatz der beschriebenen Suspensionen im Rahmen von 2K-Klebstoffen nicht geeignet.

Die DE 689 18 789 T2 betrifft eine Suspensionen wasserlöslicher Polymerer in aufgelöste Salze enthaltenden wässrigen Medien. Beschriebenen werden beispielsweise Suspensionen von Cellulosederivaten in wässrigen Lösungen von Ammoniumsalzen, wobei das Gewichtsverhältnis von Ammoniumsalz zu Wasser mindestens 0,15 beträgt. Die beschriebene Salzkonzentration ist jedoch für einen Einsatz der beschriebenen Suspensionen im Rahmen von 2K-Klebstoffen nicht geeignet.

Die DE OS 2 417 086 betrifft Zusatzmittel für Mörtel und Beton in Form von wäßrigen Dispersionen. Beschrieben werden wässrige Dispersionen, wasserlöslicher Stoffe, wobei als Dispersionsmedium eine Lösung von Salzen oder organischen Lösemitteln verwendet wird, in denen die Stoffe nur teilweise löslich oder unlöslich sind. Gemäß den Ausführungsbeispielen wird für die Dispersion von Hydroxyethylcellulose beispielsweise eine 25 Gew.-%ige Lösung von Aluminiumsulfat eingesetzt, die Dispersion eines Ethylenoxid-Polymeren erfolgt in einer 15 Gew.-%igen Lösung von Natriumsulfat. Die beschriebenen Dispersionen sind für einen Einsatz in 2K-Klebstoffen ebenfalls nicht geeignet

Aus der DE 101 16 023 ist beispielsweise ein wasserbasierter Montageklebstoff bekannt, der auf einer wässrigen Styrol/Alkylacrylat-Dispersion basiert. Der Einsatz von Salzen wird in dieser Druckschrift nicht beschrieben.

Neben den flüssigen wasserbasierten Montageklebstoffen sind aus dem Stand der Technik auch Montageklebstoffpulver bekannt, die vor dem Gebrauch erst von dem Anwender mit einem geeigneten Lösemittel vermischt werden müssen. Das Klebstoffpulver als Lagerform und Anwendungsform hat sich jedoch als nachteilig herausgestellt. Einerseits entwickeln sich bei der Verarbeitung von solchen feinen Pulvern Stäube, die beim Einatmen gesundheitsbedenklich sind, außerdem bilden sich beim Vermischen des Pulvers in einem Lösemittel auch leicht unerwünschte Klümpchen.

Es bestand daher ein Bedürfnis nach Montageklebstoffen, die eine verbesserte Anfangshaftung gegenüber den Montageklebstoffen aus dem Stand der Technik aufweisen.

Weiterhin bestand ein Bedürfnis nach Montageklebstoffen, die trotz einer hohen Anfangshaftung zu Beginn des Klebevorgangs noch Korrekturbewegungen erlauben.

Es bestand auch ein Bedürfnis nach Montageklebstoffen, deren Anwendung einfach und ungefährlich ist.

Weiterhin bestand ein Bedürfnis nach umweltfreundlichen und gesundheitsverträglichen Montageklebstoffen.

Darüber hinaus bestand ein Bedürfnis nach Montageklebstoffen, die eine hohe Anfangshaftung aufweisen, deren Austrag aus einem entsprechenden Klebstoffbehälter jedoch einfach ist und keinen hohen Kraftaufwand erfordert.

Es bestand auch ein Bedürfnis nach einem Verfahren zur Herstellung von Montageklebstoffen mit verbesserter Anfangshaftung, die zudem gegebenenfalls leicht in der Handhabung sowie umweltfreundlich und gesundheitsverträglich sind.

Aufgabe der vorliegenden Erfindung bestand also darin, Montageklebstoffe zur Verfügung zu stellen, die eines oder vorzugsweise mehrere oder alle der oben genannten Bedürfnisse erfüllen.

Gegenstand der vorliegenden Erfindung ist daher ein 2-Komponenten-Montageklebstoff umfassend Komponenten A und B, worin Komponente A
- mindestens ein wasserlösliches Polysaccharid oder ein Gemisch aus zwei oder mehr wasserlöslichen Polysacchariden in einer Menge von 0,5 bis 50 Gew.-% bezogen auf das Gesamtgewicht der Komponente A,
- Wasser sowie
- eine die Löslichkeit mindestens eines in Komponente A vorliegenden wasserlöslichen Polysaccharids in Wasser verringernde in Wasser dissoziierende Verbindung
   und Komponente B
- Wasser
- gegebenenfalls eine die Löslichkeit eines in Komponente A vorliegenden wasserlöslichen Polysaccharids in Wasser verringernde in Wasser dissoziierende Verbindung und
- gegebenenfalls ein wasserlösliches Polysaccharid oder ein Gemisch aus zwei oder mehr wasserlöslichen Polysacchariden enthält,
   wobei
- mindestens Komponente A oder Komponente B mindestens ein wasserunlösliches in Wasser dispergierbares synthetisches Polymerisat enthält und
- die Konzentration der in Wasser dissoziierenden Verbindung in Komponente A so hoch ist, dass die Löslichkeit mindestens eines der in Komponente A vorliegenden wasserlöslichen Polysaccharide verringert ist und
- die Konzentration der in Wasser dissoziierenden Verbindung in Komponente A und B insgesamt so hoch ist, dass die Löslichkeit mindestens eines der in Komponente A vorliegenden wasserlöslichen Polysaccharide nach Zusammenfügen der Komponenten A und B höher ist, als in Komponente A alleine.

Unter einem 2-Komponenten-Montageklebstoff wird im Rahmen der vorliegenden Erfindung ein Klebstoffsystem verstanden, welches aus zwei voneinander getrennt vorliegenden Komponenten besteht.

Die einzelnen Komponenten können zur Erzielung einer Verklebung mit großer Anfangshaftung beispielsweise vor dem Auftrag auf die zu verklebenden Flächen miteinander vermischt werden. Eine derartige Vermischung kann beispielsweise manuell geschehen, indem die einzelnen Komponenten beispielsweise auf eine Fläche aufgebracht und dort manuell, beispielsweise mit einem Spatel, vermischt werden. Als Fläche eignet sich dabei beispielsweise eine der zu verklebenden Flächen. Es ist jedoch im Rahmen der vorliegenden Erfindung ebenfalls möglich, die beiden Klebstoffkomponenten zunächst auf einer beliebigen Fläche zu vermischen und die vermischte Masse anschließend auf die zu verklebenden Flächen aufzutragen.

Es ist im Rahmen der vorliegenden Erfindung ebenfalls vorgesehen, die Klebstoffkomponenten einzeln auf die jeweils zu verklebenden Flächen aufzutragen und dort zu vermischen, so dass erst zu dem Zeitpunkt, an dem die beiden zu verklebenden Flächen miteinander verbunden werden, auch die beiden Klebstoffkomponenten A und B miteinander in Kontakt kommen.

Es ist im Rahmen der vorliegenden Erfindung nicht erforderlich, dass beide Komponenten A und B, wenn sie getrennt voneinander vorliegen, klebende Eigenschaften aufweisen. Es ist erfindungsgemäß beispielsweise vorgesehen, dass nur eine der beiden Komponenten A oder B klebende Eigenschaften aufweist. Vorzugweise handelt es sich dabei um diejenige Komponente, welche das synthetische Polymerisat oder ein Gemisch aus zwei oder mehr synthetischen Polymerisaten enthält.

Unter der Anfangshaftung eines Klebstoffs wird die gemessene Haftung sofort nach Auftrag des Klebstoffes auf das zu verklebende Werkstück verstanden. Zur Messung der Anfangshaftung wird dabei wie folgt vorgegangen: ein Brettchen aus Buchensperrholz (150 x 30 x 4 mm), das an einer der schmalen Seiten ein Loch von 8 mm Durchmesser zur Aufnahme eines Hakens einer Federwaage aufweist, wird, ausgehend von der schmalen Seiten ohne Loch, auf einer Länge von 100 Millimetern und einer Breite von mindestens 20 mm mit dem zu prüfenden Klebstoff versehen. Die Schichtdicke des Klebstoffes muss dabei mindestens etwa 2 mm betragen. Um die erforderliche Schichtdicke zu gewährleisten werden 4 Stahlkugeln mit einem Durchmesser von 2 mm in den Klebstoffstrang eingefügt. Zur Messung der Anfangshaftung wird ein Teststreifen aus eloxiertem Aluminium (150 x 15 x 1 mm) in das Klebstoffbett eingefügt und bis zur Berührung der Stahlkugeln in das Klebstoffbett eingedrückt. Der verklebte Überlappungsbereich misst 10 x 1,5 cm (15 cm²). Der Teststreifen aus eloxiertem Aluminium weist an seinem dem verklebten Bereich gegenüberliegenden schmalen Ende ebenfalls eine Öffnung zur Aufnahme eines Hakens einer Federwaage auf. Der so hergestellte Messkörper wird mit dem Holzende in die Federwaage eingehängt (500 g Federwaage) und der Aluminiumstreifen langsam nach unten gezogen. Dem Moment, in welchem der Aluminiumstreifen beginnt auf dem Klebstoff zu rutschen wird der Wert an der Federwaage abgelesen und notiert. Um die Anfangshaftung zu berechnen wird der abgelesene Wert durch die Verklebungsfläche (15 cm²) dividiert und ergibt so die Anfangshaftung in g/cm².

Die Komponente A eines erfindungsgemäßen Klebstoffsystems enthält mindestens ein wasserlösliches Polysaccharid oder ein Gemisch aus zwei oder mehr wasserlöslichen Polysacchariden in einer Menge von etwa 0,5 bis etwa 50 Gew.-% bezogen auf das Gesamtgewicht der Komponente A.

Als wasserlösliche Polysaccharide eignen sich im Rahmen der vorliegenden Erfindung grundsätzlich alle Polysaccharide oder deren Derivate, sofern sie in Wasser zumindest teilweise löslich sind. Unter einem Polysaccharid wird jedes Molekül verstanden, das mindestens etwa 5 - 10 glykosidisch verbundene Zuckermoleküle aufweist. Im Rahmen der vorliegenden Erfindung geeignete Polysaccharide weisen beispielsweise etwa 100 bis etwa 100.000 glykosidisch verbundene Zuckermoleküle auf. Der Verzweigungsgrad der erfindungsgemäß geeigneten Polysaccharide kann sehr unterschiedlich sein, beispielsweise aufgrund des Verhältnisses der beta-1,4 und 1,6-glykosidischen Bindungen und deren Anordnung zueinander. Im Rahmen der vorliegenden Erfindung eignen sich sowohl Polysaccharide tierischer als auch pflanzlicher Herkunft sowie synthetisch hergestellte Polysaccharide. Im Rahmen der Erfindung können an den Polysacchariden noch beliebige technische gewünschte Modifikationen vorgenommen werden, beispielsweise eine Methylierung, Carboxylierung, Hydroxymethylierung, Hydroxyethylierung und dergleichen.

Beispielsweise eigenen sich im Rahmen der vorliegenden Erfindung die wasserlöslichen Polysaccharide Stärke, Xanthan-Gum, Guar-Guar, Agar-Agar, Alginate und Tylosen, Carboxymethylcellulose und Hydroxyethylcellulose sowie Derivate der oben aufgezählten Polysaccharide.

Als Stärke oder als Basis der Stärkederivate eignen sich sämtliche Stärketypen wie Kartoffelstärke, Maisstärke, Weizenstärke, Reisstärke, Milostärke, Tapiokastärke oder Gemische aus zwei oder mehr der genannten Stärken und dergleichen. Im Rahmen einer bevorzugten Ausführungsform der vorliegenden Erfindung werden Stärke oder Stärkederivate auf Basis von Kartoffel- oder Maisstärke oder deren Gemische eingesetzt.

Die Stärke muss im Rahmen der vorliegenden Erfindung wasserlöslich sein. Insbesondere ist im Rahmen der vorliegenden Erfindung modifizierte Stärke geeignet, wobei eine entsprechende Modifikation durch physikalische oder geringe chemische Einwirkung zustande kommt. Konkrete Beispiele für derartige Stärkederivate sind partiell abgebaute Stärke und Quellstärke.

Die Stärkederivate sollen wasserlöslich sein. In diesem Zusammenhang sind insbesondere Stärkeester oder Stärkeether geeignet, vor allem carboxylierte oder alkoxylierte Stärken. Als carboxylierte oder alkoxylierte Stärken eignen sich sämtliche entsprechend modifizierte, bereits oben genannte natürliche Stärketypen. Brauchbare Stärkederivate weisen einen Carboxylierungsgrad von etwa 0,1 bis etwa 2,0 oder einen Alkoxylierungsgrad von etwa 0,05 bis etwa 1,5 auf.

Als Celluloseverbindungen eignen sich neben der natürlichen Cellulose insbesondere die Celluloseether. Geeignet sind beispielsweise Carboxymethylcellulose (CMC), Carboxymethylmethylcellulose (CMMC), Ethylcellulose (EC), Hydroxypropylcellulose (HPC), Hydroxypropylmethylcellulose (HPMC), Hydroxybutylcellulose (HBC), Hydroxybutylmethylcellulose (HBMC), Hydroxyethylcellulose (HEC), Hydroxyethylcarboxymethylcellulose (HECMC), Hydroxyethylethylcellulose (HEEC), Hydroxypropylcellulose (HPC), Hydropropylcarboxymethylcellulose (HPCMC), Hydroxypropylmethylcellulose (HPMC), Hydroxyethylmethylcellulose (HEMC), Methylhydroxyethylcellulose (MHEC), Methylhydroxyethylpropylcellulose (MHEPC), Methylcellulose (MC) und Propylcellulose (PC), wobei Carboxymethylcellulose, Methylcellulose, Methylhydroxycellulose und Methylhydroxypropylcellulose sowie Gemische aus zwei oder mehr davon sowie die Alkalisalze der CMC und die leicht ethoxylierte MC oder Gemische aus zwei oder mehr der genannten Verbindungen.

Im Rahmen einer bevorzugten Ausführungsform der vorliegenden Erfindung wird das wasserlösliche Polysaccharid oder ein Gemisch aus zwei oder mehr wasserlöslichen Polysaccharidderivaten ausgewählt aus einer Gruppe bestehend aus Cellulose und Cellulosederivaten, insbesondere Methylcellulose, Stärke und Stärkederivaten, Guar und Guarderivaten, Xanthangummi und Xanthangummiderivaten. Als besonders bevorzugt gilt im Rahmen der vorliegenden Erfindung der Einsatz von Methylcellulose oder einem Methylcellulosederivat oder einem Gemisch davon.

Eine erfindungsgemäß einsetzbare Komponente A kann beispielsweise nur ein Polysaccharid oder Polysaccharidderivat enthalten. Es ist jedoch Rahmen der vorliegenden Erfindung ebenso möglich, dass eine erfindungsgemäß einsetzbare Komponente A 2 oder mehr Polysaccharide oder Polysaccharidderivate, beispielsweise 3, 4, 5, 6 oder 7 Polysaccharide oder Polysaccharidderivate oder deren Gemische enthält.

Der Gehalt der Komponente A an wasserlöslichen Polysacchariden oder wasserlöslichen Polysaccharidderivaten oder deren Gemischen beträgt im Rahmen der vorliegenden Erfindung 0,5 bis 50 Gew.-%, bezogen auf das Gesamtgewicht der Komponente A. Gemäß einer bevorzugten Ausführungsform der vorliegenden Erfindung beträgt der Gehalt der Komponente A an wasserlöslichen Polysacchariden oder wasserlöslichen Polysaccharidderivaten oder deren Gemischen etwa 5 bis etwa 40 Gew.-% oder etwa 10 bis etwa 30 Gew.-%. Besonders bevorzugt wird ein Anteil von etwa 15 bis etwa 25 Gew.-%, beispielsweise etwa 18 bis etwa 23 Gew.-% oder etwa 20 bis etwa 22 Gew.-%.

Weiterhin umfasst die Komponente A Wasser. Der Wasseranteil in Komponente A kann beispielsweise etwa 1 Gew.-% bis etwa 80 Gew.-% bezogen auf das Gesamtgewicht der Komponente A betragen, vorzugsweise liegt der Anteil im Bereich von etwa 5 bis etwa 70, insbesondere im Bereich von etwa 15 bis etwa 65 Gew.-%. Besonders geeignet sind beispielsweise Komponenten A mit einem Wassergehalt von etwa 40 bis etwa 60. Gew.-%.

Es ist im Rahmen der Erfindung auch möglich, dass die Komponente A neben Wasser noch ein wasserlösliches oder wassermischbares Lösemittel oder Gemische aus zwei oder mehr zusätzlichen wasserlöslichen oder zumindest wassermischbaren Lösemitteln umfasst.

Zusammen mit Wasser können im Rahmen der vorliegenden Erfindung grundsätzlich alle Lösemittel eingesetzt werden, die wassermischbar oder wasserlöslich sind. Geeignete Lösemittel können beispielsweise einen Einfluss auf die Löslichkeit der Polysaccharide oder Polysaccharidderivate in Wasser ausüben, müssen dies jedoch nicht.

Geeignete zusätzliche Lösemittel sind beispielsweise wasserlösliche oder wassermischbare ein- oder mehrwertige Alkohole, insbesondere zwei- oder dreiwertige Alkohole, wasserlösliche oder wassermischbare Ether, insbesondere Polyether oder wasserlösliche oder wassermischbare Ketone.

Die Menge der zusätzlichen Lösemittel in der Komponente A beträgt beispielsweise etwa 0 bis etwa 40 Gew.-% bezogen auf das Gesamtgewicht von Wasser und Lösemittel oder Lösemittelgemisch in Komponente A oder von etwa 0,2 bis etwa 20 Gew.-% oder von etwa 1 bis etwa 10 Gew.-%.

Weiterhin beinhaltet die Komponente A mindestens eine in Wasser dissoziierende niedermolekulare Verbindung. Der Begriff "niedermolekular" betrifft im Rahmen des vorliegenden Textes Verbindungen, deren Molekulargewicht etwa 1000 g/mol nicht übersteigt. Vorzugsweise werden im Rahmen der vorliegenden Erfindung als niedermolekulare Verbindungen Stoffe eingesetzt, deren Molekulargewicht etwa 800 g/mol oder weniger, insbesondere etwa 500 g/mol oder weniger beträgt.

Als in Wasser dissoziierende Verbindungen eignen sich erfindungsgemäß sowohl organische als auch anorganische Verbindungen. Es ist im Rahmen der vorliegenden Erfindung bevorzugt, dass als dissoziierende Verbindungen Stoffe eingesetzt werden, die in Wasser oder wässrigen Lösungen in einer Menge von mindestens 10 g/l, vorzugsweise jedoch in einer darüber liegenden Menge, beispielsweise in einer Menge von mindesten etwa 20, 30 oder 40 g/l bei 23 °C löslich sind.

Im Rahmen einer bevorzugten Ausführungsform der vorliegenden Erfindung werden als dissoziierende Verbindungen Ammoniumsalze oder Metallsalze eingesetzt, insbesondere Salze von Alkali- oder Erdalkalimetallen. Besonders geeignet sind im Rahmen der vorliegenden Erfindung Salze von Li, Na, K, Mg, oder Ca, insbesondere die Salze von Na oder Ka..

Geeignete Anionen können ein- oder mehrwertig sein. Besonders geeignet sind dabei Halogenide wie Chloride oder Bromide, Carbonate, Hydrogencarbonate, Sulfate, Hydrogensulfate, Sulfite, Phosphate oder Phosphite.

Weiterhin ist es im Rahmen der vorliegenden Erfindung möglich, Metall- oder Ammoniumsalze von einbasischen oder mehrbasischen Säuren, beispielsweise zwei-, drei, oder vierbasischen Säuren, einzusetzen. Geeignet sind beispielsweise Salze von Carbonsäuren wie Zitronensäure oder Ameisensäure oder Essigsäure. Es hat sich im Rahmen der vorliegenden Erfindung als günstig herausgestellt ein Salz einer mehrbasischen Säure einzusetzen beispielsweise ein Salz der Zitronensäure einzusetzen.

Gemäß einer weiteren Ausführungsform der vorliegenden Erfindung hat sich beispielsweise der Einsatz von Natrium-Carbonat, Natrium-Citrat, Natrium-Formiat oder Natrium-Sulfat oder zwei oder mehrere der genannten Salze als Bestandteil der Komponente A als vorteilhaft erwiesen.

Die Komponente A beinhaltet Salz in einer Menge, bei der die Konzentration der in Wasser dissoziierenden Verbindung in Komponente A so hoch ist, dass die Löslichkeit mindestens eines der in Komponente A vorliegenden wasserlöslichen Polysaccharide verringert ist. Vorzugsweise wird dabei die Menge an dissoziierenden Verbindungen in Komponente A so gewählt, dass das wasserlösliche Polysaccharid nicht oder nur teilweise in der Komponente A gelöst vorliegt. Bevorzugt wird dabei eine möglichst geringe gelöste Menge an Polysacchariden in der Komponente A. Es ist erfindungsgemäß jedoch auch möglich, dass die Polysaccharide in der Komponente A zu etwa 5, 10, 30, 50, 70, 80, 90 % gelöst vorliegen.

Als Untergrenze für die Konzentration an in Wasser dissoziierender Verbindungen in Komponente A lässt sich daher grundsätzlich diejenige Menge bestimmen, bei der nur ein geringer Teil der in Komponente A vorliegenden Polysaccharide in seiner Auflösung gehindert ist. Eine derart geringe Menge an dissoziierenden Verbindungen in Komponente A bewirkt jedoch in der Regel keine ausreichende Verringerung der Viskosität der Komponente A. Es ist erfindungsgemäß bevorzugt, wenn die Konzentration an in Wasser dissoziierenden Verbindungen in Komponente A eine Auflösung der in dieser Komponente vorliegenden Polysaccharide oder Polysaccharidderivate zumindest so weit verringert, dass deren Löslichkeit weniger als etwa 50%, bezogen auf die Löslichkeit in der gleichen Menge Wasser ohne dissoziierende Verbindungen, beträgt. Im Rahmen einer bevorzugten Ausführungsform beträgt die Löslichkeit weniger als etwa 30%, insbesondere weniger als etwa 10%.

Grundsätzlich kann der Gehalt der Komponente A an in Wasser dissoziierenden Verbindungen in diesem Zusammenhang bis zu etwa 50 Gew.-% betragen. Der Salzgehalt liegt im Rahmen der vorliegenden Erfindung jedoch beispielsweise im Bereich von etwa 0,1 bis etwa 20 Gew.-% oder etwa 1 bis etwa 10 Gew.-%, insbesondere etwa 2 bis etwa 5 Gew.-% oder etwa 3 bis etwa 4 Gew.-% bezogen auf das Gesamtgewicht der Komponente A.

Neben der Komponente A umfasst der erfindungsgemäße 2-Komponenten-Montageklebstoff noch eine Komponente B, wobei die Komponente B mindestens Wasser sowie gegebenenfalls eine die Löslichkeit eines in Komponente A vorliegenden wasserlöslichen Polysaccharids in Wasser verringernde dissoziierende Verbindung und gegebenenfalls ein wasserlösliches Polysaccharid oder ein Gemisch aus zwei oder mehr wasserlöslichen Polysacchariden enthält.

Der einzige zwingend in Komponente B vorliegende Stoff ist Wasser. Komponente B kann daher im Rahmen der vorliegenden Erfindung zu 100% aus Wasser bestehen. Es ist jedoch im Rahmen der vorliegenden Erfindung bevorzugt, wenn Komponente B noch eine oder mehrere weitere Verbindungen enthält.

So kann Komponente B beispielsweise zusätzlich zu Wasser noch ein wasserlösliches Polysaccharid oder ein Gemisch aus zwei oder mehr wasserlöslichen Polysacchariden oder Polysaccharidderivaten enthalten. Derartige Polysaccharide oder Polysaccharidderivate eignen sich beispielsweise um die Konsistenz der Komponente B im Hinblick auf die Viskosität oder gegebenenfalls auf sonstige rheologische Eigenschaften einzustellen. Als Polysaccharide oder Polysaccharidderivate oder deren Gemische eignen sich die bereits im Rahmen des vorliegenden Textes oben beschriebenen Polysaccharide oder Polysaccharidderivate.

Für die Menge an Polysacchariden oder Polysaccharidderivaten in Komponente B gilt, dass sie, bezogen auf den Wassergehalt der Komponente B, geringer ist, als die Menge an Polysacchariden in Komponente A. Der Gehalt der Komponente B an Polysacchariden oder Polysaccharidderivaten beträgt daher im Rahmen der vorliegenden Erfindung höchstens etwa 20 Gew.-%, bezogen auf die gesamte Komponente B, insbesondere höchstens etwa 10 Gew.-%. Geeignete Gehalte liegen beispielsweise in einem Bereich von etwa 0,1 bis etwa 8 Gew.-%, beispielsweise etwa 1 bis etwa 5 Gew.-%.

Komponente B kann darüber hinaus eine in Wasser dissoziierende Verbindung oder ein Gemisch aus zwei oder mehr in Wasser dissoziierenden Verbindungen enthalten. Besonders geeignet sind dabei die bereits oben genannten in Wasser dissoziierenden Verbindungen, insbesondere die bereits oben genannten Salze.

Bezüglich des Gehalts an dissoziierender Verbindungen in Komponente B ergibt sich eine Obergrenze, die aus dem Verhalten der vermischten Komponenten A und B resultiert. Der erfindungsgemäße Effekt der deutlichen Verbesserung der Anfangshaftung liegt insbesondere dann vor, wenn die Löslichkeit der insgesamt in Komponente A und Komponente B enthaltenen Polysaccharide oder Polysaccharidderivate oder der Gemische aus Polysacchariden und Polysaccharidderivaten in dem Gemisch von Komponente A und B höher ist, als die Löslichkeit der in Komponente A vorliegenden Polysaccharidderivate in dieser Komponente alleine.

Daher ist die in Wasser dissoziierende Verbindung oder ein Gemisch aus zwei oder mehr solcher Verbindungen in der Komponente B maximal in einer Menge enthalten, die eine Löslichkeitserhöhung der wasserlöslichen Polysaccharide aus Kompnente A in einem Gemisch aus Komponente A und B ergibt, verglichen mit der Löslichkeit der Polysaccharide aus Komponente A, wenn die Komponente A getrennt von Komponente B vorliegt. Die Löslichkeit der wasserlöslichen Polysaccharide bezieht sich dabei immer auf das Lösemittel Wasser.

Die erfindungsgemäße Komponente B zeichnet sich daher gegenüber der Komponente A insbesondere dadurch aus, dass sie eine geringere Menge an dissoziierender Verbindung oder keine in Wasser dissoziierende Verbindung aufweist.

Vorzugsweise weist Komponente B einen höheren Wasseranteil auf, als die Komponente A.

So ist es beispielsweise möglich, dass die Komponente B nur Wasser enthält. Dieser Fall ist nur dann ausgeschlossen, wenn Komponente A kein wasserunlösliches, in Wasser dispergierbares Polymerisat umfasst.

Dies bedeutet, dass ein 2-Komponenten-Montageklebstoff gemäß der vorliegenden Erfindung mindestens ein wasserunlösliches, in Wasser dispergierbares Polymerisat enthalten muss, entweder als Bestandteil in der Komponente A oder als Bestandteil der Komponente B oder als Bestandteil beider Komponenten.

Die Komponente B umfasst erfindungsgemäß mindestens etwa 10 Gew. % Wasser, bezogen auf das Gesamtgewicht der Komponente B. Bevorzugt ist ein Wasseranteil von etwa 20 bis 70 Gew.-% , insbesondere von etwa 30 bis etwa 50 Gew.-% bezogen auf das Gesamtgewicht der Komponente B.

Gemäß der vorliegenden Erfindung enthält mindestens Komponente A oder Komponente B mindestens ein wasserunlösliches in Wasser dispergierbares synthetisches Polymerisat. Unter einem "Polymerisat "wird dabei im Rahmen der vorliegenden Erfindung eine Verbindung verstanden, die durch Polymerisation, insbesondere durch radikalische Polymerisation von Monomeren mit mindestens einer olefinisch ungesättigten Doppelbindung erhältlich ist. Der Begriff "Polymere ", wie er im Rahmen des vorliegenden Textes im Zusammenhang mit dem obengenannten wasserunlöslichen, in Wasser dispergierbaren synthetischen Polymerisat benutzt wird, wird daher synonym mit den Begriff Polymerisat eingesetzt, sofern nicht ausdrücklich etwas anderes gesagt wird.

Es ist dabei erfindungsgemäß vorgesehen, dass eine der beiden Komponenten entweder ein solches wasserdispergierbares Polymeres oder ein Gemisch aus zwei oder mehr solcher wasserdispergierbarer Polymerer enthält. Es ist erfindungsgemäß jedoch ebenso möglich, dass sowohl Komponente A als auch Komponente B jeweils ein solches wasserdispergierbares Polymeres oder ein Gemisch aus zwei oder mehr solcher wasserdispergierbarer Polymerer enthält. Im Rahmen einer bevorzugten Ausführungsform der vorliegenden Erfindung enthält jedoch nur eine der beiden Komponenten ein solches wasserdispergierbares Polymeres oder ein Gemisch aus zwei oder mehr solcher wasserdispergierbarer Polymerer, insbesondere Komponente A.

Als wasserunlösliches, in Wasser dispergierbares Polymeres kann grundsätzlich jedes dem Fachmann bekannte Polymere eingesetzt werden, das in Wasser oder wässrigen Lösungen dispergierbar, aber nicht wasserlöslich ist. So kann es sich beispielsweise um ein Polymeres oder ein Gemisch aus zwei oder mehr Polymeren handeln.

Grundsätzlich handelt es sich dabei insbesondere um Homo- und Copolymerisate von Vinylestern, Styrol, Acrylsäureestern und Vinylchlorid.

Als Polymerisate geeignete Vinylesterpolymerisate sind beispielsweise Vinylacetat-Homopolymere, Copolymere des Vinylacetats mit Ethylen- und/oder Vinylchlorid und/oder weiteren Vinylestern wie Vinyllaurat, Versaticsäurevinylestern, Vinylpivalat oder Estern von Maleinsäure oder Fumarsäure oder Copolymere aus zwei oder mehr der genannten Monomeren oder Homopolymerisate von Vinylestern von gesättigten C₃₋₈-Alkylcarbonsäuren oder deren Copolymerisate mit Ethylen, Vinylchlorid oder weiteren Vinylestern.

Die obengenannten Acrylsäureester, Methacrylsäureester oder Styrolpolymerisate leiten sich aus der Polymerisation von Styrol oder Estern der Acrylsäure oder Methacrylsäure ab. Als Ester der Acrylsäure oder Methacrylsäure werden vorzugsweise Ester mit geradkettigen oder verzweigten oder cyclischen aliphatischen Alkoholen mit 1 bis 20 C-Atomen eingesetzt.

Weitere Styrolpolymerisate können beispielsweise Copolymerisate von Styrol mit einem oder mehreren weiteren Monomeren sein.

Insgesamt geeignet sind beispielsweise Acrylsäure-Styrol-Copolymerisate, Methacrylsäure/Styrol-Copolymerisate oder Styrol-Butadiencopolymerisate. Als Vinylchlorid-Polymerisate sind Vinylchlorid-Ethylencopolymere geeignet.

Beispielsweise werden im Rahmen der vorliegenden Erfindung Vinylacetat-Homopolymere, Vinylacetat-Ethylen-Copolymere oder Copolymere von Vinylestern von gesättigten Alkylcarbonsäuren und Ethylen mit einem Ethylengehalt von 1 bis etwa 40 Gew.-% Ethylen und 0 bis etwa 40 Gew.-% weiteren Vinylestern aus der Gruppe der Vinylester von gesättigten C₃₋₈-Alkylcarbonsäuren oder Vinylchlorid oder Gemischen aus zwei oder mehr davon, Styrolacrylate wie Styrol-Butylacrylat oder Styrol-Ethylhexylacrylat mit einem Styrolgehalt von 1 bis etwa 70 Gew.-% eingesetzt.

Ebenfalls geeignet sind beispielsweise Vinylester-Homo- oder -Copolymere, beispielsweise mit Ethylen, deren monomerer Grundbaustein ein Vinylester einer linearen oder verzweigten Carbonsäure mit etwa 2 bis etwa 44, beispielsweise etwa 3 bis etwa 15 C-Atomen darstellt. Als Monomere für diese homo- oder polymeren Polyvinylester kommen Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis etwa 15 C-Atomen im Säurerest, Vinylester von längerkettigen gesättigten oder ungesättigten Fettsäuren wie Vinyllaurat, Vinylstearat oder Vinylester der Benzoesäure und substituierter Derivate der Benzoesäure wie Vinyl-p-tert-butylbenzoat in Frage. Die genannten Vinylester können jeweils einzeln oder als Gemische aus zwei oder mehr der genannten Vinylester im Vinylester Polymeren vorliegen.

Besonders geeignet sind beispielsweise die Polymerisate der Acrylsäurealkylester oder Methacrylsäurealkylester mit einer C₁-C₁₂-Alkylgruppe im Esterrest, beispielsweise die Polymerisate von Methylmethacrylat, Methylacrylat, n-Butylacrylat, Ethylacrylat und 2-Ethylhexylacrylat. Insbesondere sind auch Polymere geeignet, sich durch Polymerisation von Gemischen von Acrylsäurealkylestern und (Meth)acrylsäurealkylestern erhalten lassen.

Als vinylaromatische Verbindungen zur Herstellung geeigneter Polymerisate eignen sich beispielsweise Vinyltoluol, α- und p-Methylstyrol, α-Butylstyrol, 4-n-Butylstyrol, 4-n-Decylstyrol und Styrol. Beispiele für geeignete Nitrile sind Acrylnitril und Methacrylnitril.

Zur Herstellung geeigneter Polymerer eignen sich darüber hinaus auch nichtaromatische Kohlenwasserstoffe mit 2 bis 8 C-Atomen und mindestens zwei olefinischen Doppelbindungen wie Butadien, Isopren, und Chloropren.

Weitere Monomere, die z.B. von 0 bis 40 Gew.-%, vorzugsweise von 0 bis 20 Gew.-% und besonders bevorzugt von 0,2 bis 10 Gew.-% im Polymeren enthalten sein können, sind insbesondere C₁-C₁₀-Hydroxyalkyl(meth)acrylate, (Meth)acrylamid sowie dessen am Stickstoff mit C₁-C₄-Alkyl substituierten Derivate, ethylenisch ungesättigte Carbonsäuren, Dicarbonsäuren, deren Halbester und Anhydride, z.B. (Meth)acrylsäure, Maleinsäure, Fumarsäure, Maleinsäureanhydrid, Maleinsäure- und Fumarsäurehalbester und Itaconsäure.

Besonders bevorzugt ist im Rahmen der vorliegenden Erfindung ein Polymerisat, das ein Polymeres von Styrol und Acrylsäure oder Styrol und Acrylsäureester und enthält. Insbesondere wird ein Polymerisat eingesetzt, das ein Polymeres von Styrol und einem Acrylsäureester enthält, wobei der Anteil von Styrol an der zur Herstellung des Polymerisats eingesetzten Monomerenmischung 50 Gew.-% oder mehr beträgt.

Die Glasübergangstemperatur geeigneter Polymerer liegt vorzugsweise zwischen - 50 und 10°C, beispielsweise zwischen -40°C und -10°C. Die Mindestfilmbildetemperatur (MFT) beträgt etwa 10 bis etwa 25 °C, insbesondere etwa 15 bis etwa 20 °C.

Die Glasübergangstemperatur des Polymeren lässt sich nach üblichen Methoden wie Differentialthermoanalyse oder Differential Scanning Calorimetrie (s. z.B. ASTM 3418/82, sog. "midpoint temperature") bestimmen.

Die Herstellung geeigneter Polymerer erfolgt beispielsweise durch radikalische Polymerisation. Geeignete Polymerisationsmethoden wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, so dass wässrige Polymerdispersionen entstehen.

Die Monomeren können bei einer solchen Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxid, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wässrigen Sekundärdispersionen wird das Copolymerisat zunächst durch Lösungspolymerisation in einem organischen Lösemittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösemittel kann abdestilliert werden. Die Herstellung von wässrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 30 bis 80, besonders bevorzugt 35 bis 60 Gew.-%.

Gegenstand der vorliegenden Erfindung ist daher auch ein 2-Komponenten-Montageklebstoff, der als wasserunlösliches, in Wasser dispergierbares Polymerisat ein Styrol/(Meth)acrylat-Copolymerisat enthält.

Der Anteil der oben beschriebenen Polymerdispersion in der Komponente A beträgt vorzugsweise etwa 10 bis etwa 80 Gew.-% bezogen auf das Gesamtgewicht der Komponente A, oder etwa 20 bis etwa 70 Gew.-% oder etwa 40 bis etwa 60 Gew.-%. Der genannte Anteil bezieht sich dabei auf die gesamte Polymerdispersion, enthaltend Polymeres, Wasser und Zusatzstoffe.

Die in einem erfindungsgemäßen Klebstoff vorliegenden Komponenten A und B können neben den obengenannten Verbindungen noch weitere Zusatzstoffe enthalten.

Die Komponente A und B können dabei bis zu etwa 70 Gew.-% Zusatzstoffe umfassen. Grundsätzlich ist es im Rahmen der vorliegenden Erfindung möglich, Komponente A oder B oder beiden Komponenten einen oder mehrere Zusatzstoffe beizumischen. Grundsätzlich eignet sich jeder dem Fachmann bekannte Zusatzstoff für Klebstoffzusammensetzungen, je nach Bedarf.

Geeignete Zusatzstoffe sind beispielsweise Additive, Füllstoffe, Weichmacher, Entschäumer, Verdicker, Tenside, Antiabsetzmittel, Filmbildungshilfsmittel, Konservierungsmittel, Netzmittel, Konsistenzbildner und Zusatzkomponenten mit Klebkraft wie Dextrine oder weitere ionogene Celluloseether.

So kann eine erfindungsgemäße Komponente A oder eine erfindungsgemäße Komponente B noch Additive enthalten. Als Additive eignen sich insbesondere wasserlösliche ionische oder nichtionische Polymere aus der Gruppe der Polyvinylpyrrolidone, Vinylpyrrolidon/Vinylester-Copolymere, wasserlösliche amphotere Polymere aus der Gruppe der Alkylacrylamid/Acrylsäure-Copolymere, Alkylacrylamid/Methacrylsäure-Copolymere, Alkylacrylamid/Methylmethacrylsäure-Copolymere, Alkylacrylamid/Acrylsäure/Alkylaminoalkyl(meth)acrylsäure-Copolymere, Alkylacrylamid/Methacrylsäure/Alkylaminoalkyl(meth)acrylsäure-Copolymere, Alkylacrylamid/Methylmethacrylsäure/Alkylaminoalkyl(meth)acrylsäure-Copolymere, Alkylacrylamid/Alkylmethacrylat/Alkylaminbethylmethacrylat/Alkylmethacrylat Copolymere, Copolymere aus ungesättigten Carbonsäuren, kationisch derivatisierten ungesättigten Carbonsäuren, gegebenenfalls weiteren ionischen oder nichtionogenen Monomeren, wasserlösliche zwitterionische Polymere aus der Gruppe der Acrylamidoalkyltrialkylammoniumchlorid/Acrylsäure-Copolymere sowie deren Alkali- und Ammoniumsalze, Acrylamidoalkyltrialkylammoniumchlorid/Methacrylsäure-Copolymere sowie deren Alkali- und Ammoniumsalze, Methacroylethylbetain/Methacrylat-Copolymere, wasserlösliche anionische Polymere aus der Gruppe der Vinylacetat/Crotonsäure-Copolymere, Vinylpyrrolidon/Vinylacrylat-Copolymere, Acrylsäure/Ethylacrylat/N-tert.Butylacrylamid-Terpolymere, Pfropfpolymere aus Vinylestern, Estern von Acrylsäure oder Methacrylsäure allein oder im Gemisch, copolymerisiert mit Crotonsäure, Acrylsäure oder Methacrylsäure mit Polyalkylenoxiden und/oder Polyalkylenglycolen, gepfropfte und vernetzte Copolymere aus der Copolymerisation von mindestens einem Monomeren vom nicht-ionischen Typ, mindestens einem Monomeren vom ionischen Typ, von Polyethylenglycol und einem Vernetzer durch Copolymerisation mindestens eines Monomeren jeder der drei folgenden Gruppen erhaltenen Copolymere, Ester ungesättigter Alkohole und kurzkettiger gesättigter Carbonsäuren und/oder Ester kurzkettiger gesättigter Alkohole und ungesättigter Carbonsäuren, ungesättigte Carbonsäuren, Ester langkettiger Carbonsäuren und ungesättigter Alkohole und/oder Ester aus den Carbonsäuren der Gruppe mit gesättigten oder ungesättigten, geradkettigen oder verzweigten C₈₋₁₈-Alkoholen, Terpolymere aus Crotonsäure, Vinylacetat und einem Allyl- oder Methallylester, Tetra- und Pentapolymere aus Crotonsäure oder Allyloxyessigsäure, Vinylacetat oder Vinylpropionat, verzweigten Allyl- oder Methallylestern, Vinylethern, Vinylestern oder geradkettigen Allyl- oder Methallylestern, Crotonsäure-Copolymere mit einem oder mehreren Monomeren aus der Gruppe Ethylen, Vinylbenzol, Vinylmethylether, Acrylamid und deren wasserlöslicher Salze, Terpolymere aus Vinylacetat, Crotonsäure und Vinylestern einer gesättigten aliphatischen in α-, β- oder γ-Stellung verzweigten Monocarbonsäure, wasserlöslichen kationische Polymeren aus der Gruppe der quaternierten Cellulose-Derivate, Polysiloxane mit quaternären Gruppen, kationischen Guar-Derivate, polymeren Dimethyldiallylammoniumsalze und deren Copolymere mit Estern und Amiden von Acrylsäure und Methacrylsäure, Copolymere des Vinylpyrrolidons mit quaternierten Derivaten des Dialkylaminoacrylats und -methacrylats, Vinylpyrrolidon-Methoimidazoliniumchlorid-Copolymere, quaternierter Polyvinylalkohol, unter den INCI-Bezeichnungen Polyquaternium 2, Polyquaternium 17, Polyquaternium 18 und Polyquaternium 27 angegebenen Polymere.

Der Anteil an solchen Additiven in der Komponente A liegt erfindungsgemäß bei etwa 0 bis etwa 70 Gew.%, beispielsweise bei etwa 1 bis etwa 50 Gew.-%, oder etwa 5 bis etwa 40 Gew.-%, bezogen auf das Gesamtgewicht der Komponente A.

Als Füllstoffe kommen im Rahmen einer weiteren Ausführungsform der vorliegenden Erfindung beispielsweise Carbonate (insbesondere Calciumcarbonat), Quarzmehl, Silikate (beispielsweise Talk, Ton, Glimmer), Schwerspat, Kreide, Kieselsäure Kieselerde, Sulfate wie Calcium- oder Bariumsulfat oder Aluminiumhydroxid in Frage.

Derartige Füllstoffe können in der erfindungsgemäßen Komponente A beispielsweise in einer Menge von bis zu etwa 60, vorzugsweise von etwa 0 bis etwa 20 Gew.-% oder etwa 20 bis etwa 50 Gew.-%, bezogen auf die gesamte Komponente A, enthalten sein. So kann der Komponente A beispielsweise etwa 5 bis etwa 10 Gew.-% Kreide zugemischt werden.

Bei den Füllstoffen handelt es sich vorzugsweise um feingemahlene Füllstoffe, insbesondere Kreide, mit einem mittleren Teilchendurchmesser von im allgemeinen 2 bis 10 µm. Quarzmehl wird vorzugsweise mit einem mittleren Teilchendurchmesser von 3 bis 20 µm eingesetzt.

Bei den im Rahmen der vorliegenden Erfindung als Zusatzstoff geeigneten Weichmachern handelt es sich gemäß DIN 55945 um flüssige oder feste indifferente organische Substanzen mit geringem Dampfdruck. Aufgrund ihres Löse- und Quellvermögens können sie die Härte des Polymeren verringern und sein Haftvermögen steigern.

Vorzugsweise werden als Weichmacher Adipin- und Sebacinsäureweichmacher, Phosphorsäureweichmacher, Zitronensäureweichmacher, Fettsäureester und epoxidierte Fettsäureester, Fettalkohole, Polypropylenglykol, Polyethylenglykol, Benzoate oder Phthalate oder Gemische aus zwei oder mehr davon eingesetzt.

In einer erfindungsgemäßen Komponente A können weiterhin anionische, kationische oder ampholytische Tenside, oder Gemische aus zwei oder mehr davon enthalten sein. Beispiele für geeignete anionische Tenside sind Alkylsulfate, insbesondere solche mit einer kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

Die oben genannten Mengenangaben gelten im Wesentlichen auch für Komponente B, sofern die Einschränkungen bezüglich der Löslichkeit der Polysaccharide oder Polysaccharidderivate nach dem Zusammenfügen der Komponenten A und B eingehalten werden.

Erfindungsgemäß umfasst eine geeignete Komponente A beispielsweise
- etwa 10 Gew.-% bis 40 Gew.-% eines wasserunlöslichen, in Wasser dispergierbaren Polymerisats
- etwa 0 Gew.-% bis etwa 20 Gew.-% Füllstoffe
- etwa 5 Gew.-% bis 70 Gew.-% Wasser,
- etwa 1 Gew.-% bis 50 Gew.-% eines wasserlöslichen Polysaccharids oder eines Gemischs aus zwei oder mehr wasserlöslichen Polysacchariden und
- etwa 1 bis 6 Gew.-% eines Metallsalzes.

Insbesondere umfasst eine geeignete Komponente A beispielsweise
- etwa 12 Gew.-% bis 25 Gew.-% oder etwa 15 bis etwa 22 Gew.-% eines wasserunlöslichen, in Wasser dispergierbaren Polymerisats
- etwa 0 Gew.-% bis etwa 10 Gew.-% Füllstoffe
- etwa 15 Gew.-% bis 60 Gew.-% oder etwa 25 bis etwa 58 Gew.-% Wasser,
- etwa 10 Gew.-% bis 40 Gew.-% oder etwa 15 bis etwa 25 Gew.-% eines wasserlöslichen Polysaccharids oder eines Gemischs aus zwei oder mehr wasserlöslichen Polysacchariden und
- etwa 2 bis etwa 5 Gew.-% oder etwa 3 bis etwa 4,5 Gew.-% eines Metallsalzes.

Es ist im Rahmen der vorliegenden Erfindung vorteilhaft, jedoch nicht unbedingt notwendig, wenn sowohl die Komponente A als auch die Komponente B eigenständig klebende Gemäß einer weiteren Ausführungsform der vorliegenden Erfindung ist die Anfangshaftung des 2-Komponenten-Montageklebstoffes jedoch auch dann erfindungsgemäß hoch, wenn der Komponente A lediglich Wasser als Komponente B zugemischt wird.

Gemäß einer bevorzugten Ausführungsform der vorliegenden Erfindung umfasst die Komponente B beispielsweise etwa
- 0 Gew.-% bis etwa 70 Gew.-% eines wasserunlöslichen in Wasser dispergierbaren Polymerisats,
- 0 Gew.-% bis etwa 50 Gew.-% eines Füllstoffs,
- 0,1 Gew.-% bis etwa 5 Gew.-% eines Verdickungsmittels (z.B. wasserlösliches Polysaccharid)
- etwa 29,9 Gew.-% bis etwa 99,9 Gew.-% Wasser.

Gemäß einer besonders bevorzugten Ausführungsform der vorliegenden Erfindung umfasst die Komponente B beispielsweise etwa
- 15 Gew.-% bis etwa 55 Gew.-% oder etwa 25 bis etwa 40 Gew.-% eines wasserunlöslichen in Wasser dispergierbaren Polymerisats,
- 15 Gew.-% bis etwa 40 Gew.-% oder etwa 25 bis etwa 38 Gew.-% eines Füllstoffs,
- 1 Gew.-% bis etwa 4,5 Gew.-% oder etwa 2 bis etwa 4 Gew.-% eines Verdickungsmittels (z.B. wasserlösliches Polysaccharid)
- etwa 30 Gew.-% bis etwa 60 Gew.-% oder etwa 31 Gew.-% bis etwa 45 Gew.-% Wasser.

Ein erfindungsgemäßer 2-Komponenten-Montageklebstoff, kann ein Verhältnis Komponente A zu Komponente B im Bereich von etwa 20:1 bis etwa 1:20 aufweisen. Welches Verhältnis hinsichtlich der Anfangshaftung die optimalen Ergebnisse aufweist, hängt jedoch auch von der spezifischen Zusammensetzung der beiden Komponenten ab.

Wenn die Komponente A beispielsweise einen sehr hohen Salzanteil aufweist, ist es vorteilhaft, mehr an Komponente B einzusetzen, um eine sehr gute Anfangshaftung zu erzeugen, da hohe Verdünnung zu einer weitgehenden Auflösung der wasserlöslichen Polysaccharide führt. Prinzipiell maßgeblich für das Verhältnis von Komponente A zu Komponente B ist daher der nach dem Vermischen der Komponente vorliegende Gehalt an wasserlöslichen Polysacchariden und Polysaccharidderivaten, der Salzgehalt sowie der Gehalt an Wasser. Grundsätzlich sollte nach dem Vermischen der Komponenten A und B der resultierende Klebstoff etwa folgende Zusammensetzung aufweisen:
- etwa 5 Gew.-% bis etwa 30 Gew.-% eines wasserunlöslichen, in Wasser dispergierbaren Polymerisats,
- etwa 10 Gew.-% bis etwa 50 Gew.-% eines Füllstoffs,
- etwa 1 Gew.-% bis 10 Gew.-% eines wasserlöslichen Polysaccharids oder eines Gemischs aus zwei oder mehr wasserlöslichen Polysacchariden und
- etwa 0,1 Gew.-% bis etwa 10 Gew.-% weiterer Zusatzstoffe und
- etwa 43,9 Gew.-% bis etwa 79,9 Gew.-% Wasser.
   Gemäß einer weiteren Ausführungsform der vorliegenden Erfindung hat sich gezeigt, dass die Inhaltsstoffe der Komponenten A und B derart eingestellt werden sollten, dass ein Verhältnis der Komponente A zu Komponente B von etwa 1:1 bis etwa 1:15 eingesetzt werden kann. Dies ist beispielsweise dann gegeben, wenn die Komponente A etwa 20 Gew.-% Methylcellulose und bis zu etwa 4 Gew.-% Natriumcitrat umfasst.
   Ein weiterer Gegenstand der Erfindung ist ein Verfahren zur Herstellung eines Klebstoffes umfassend die Schritte
- Herstellung einer Komponente A durch Vermischen von Wasser, einer in Wasser dissoziierenden Verbindung, einem wasserlöslichen Polysaccharid oder Polysaccharidderivat oder einem Gemisch aus zwei oder mehr davon, gegebenenfalls einem wasserunlöslichem, in Wasser dispergierbaren Polymerisat und gegebenenfalls Zusatzstoffen
- Herstellen einer Komponente B durch Vermischen von Wasser, einer in Wasser dissoziierenden Verbindung, einem wasserlöslichen Polysaccharid oder Polysaccharidderivat oder einem Gemisch aus zwei oder mehr davon, gegebenenfalls einem wasserunlöslichem, in Wasser dispergierbaren Polymerisat und gegebenenfalls Zusatzstoffen und
- gegebenenfalls Vermischung der Komponenten A und B vor dem Auftrag des erfindungsgemäßen Montageklebstoffes auf die zu verklebenden Substratflächen.

Zur Herstellung der erfindungsgemäßen Komponente A werden beispielsweise eine wässrige Polymerdispersion, vorzugsweise mit einem Feststoffgehalt von 50 bis 65 Gew.-% und einem Gehalt von 0 bis 10, vorzugsweise 2 bis 5 Gewichtsprozent an Füllstoffen, bis zu 4 % eines geeigneten Salzes, beispielsweise Natriumcitrat, mit etwa 20 bis etwa 25 % eines Cellulosederivates vermischt. Die Komponenten lassen sich ohne Probleme unter den üblichen Bedingungen (beispielsweise bei Temperaturen zwischen etwa 50 und etwa 80 °C) zur erfindungsgemäßen wässrigen Komponente A verarbeiten. Entsprechendes gilt für die Komponente B, sofern die Komponente B nicht ausschließlich aus Wasser besteht.

Im allgemeinen wird eine erfindungsgemäße Komponente A folgendermaßen hergestellt: Eine wässrige Polymerdispersion wird bei 10 bis 90 °C im Rührwerk vorgelegt und Zusätze wie Entschäumer, Konservierungsmittel, Verdicker (Salz und Methycellulose), Emulgatoren und Wasser sowie der Füllstoff unter Rühren zugegeben.

Der erfindungsgemäße 2-Komponenten-Montageklebstoff kann z.B. folgendermaßen aufgetragen werden.

Der erfindungsgemäße 2-Komponenten-Montageklebstoff weist ein ausgezeichnetes Niveau anwendungstechnischer Eigenschaften wie Schälfestigkeit, Scherfestigkeit, oder Wärmestandfestigkeit auf.

Die Anfangsklebkraft eines erfindungsgemäßen Klebstoffs beträgt mehr als 30, insbesondere mehr als 40, vorzugsweise mehr als 60, weiter bevorzugt mehr als 80 g/cm².

Die offene Zeit sollte mehr als 15, vorzugsweise mehr als 20 bis maximal etwa 40 Minuten betragen. Eine offene Zeit unter 10 Minuten wird als ungenügend bezeichnet.

Der erfindungsgemäße 2-Komponenten-Montageklebstoff erlaubt noch innerhalb der ersten 5 Minuten nach dem in Kontakt bringen der zu verklebenden Flächen eine Korrekturmöglichkeit.

Die Messung der offenen Zeit erfolgt dabei wie nachstehend beschrieben: Auf eine Spanplatte FPY, die mindestens eine Woche im Normklima konditioniert wurde, wird mit einem Zahnspachtel Typ B2 der zu prüfende Klebstoff aufgezogen. Sobald der Klebstoff aufgezogen ist wird eine Struktur gestartet. In Abständen von zwei Minuten werden nun Schaumstoffstreifen (8 x 2,5 cm) auf den Klebstofffilm gelegt und mit einer Andruckrolle (3 kg) ins Klebstoffbett eingerollt. Diese Prozedur wird solange durchgeführt, wie eine Benetzung der Schaumstoffstreifen mit den Klebstoff möglich ist. Nach der vollständigen Durchtrocknung des Klebstoffes wird die Festigkeit der Schaumstoffstreifen im Klebstoffbett beurteilt. Ist ein Schaumstoffstreifen vollständig aus dem Klebstoffbett zu entfernen, ist die offene Zeit überschritten. Die Zeit die bis zum Verkleben des vorhergehenden Schaumstoffstreifens benötigt wurde, wird als offene Zeit notiert.

Die erfindungsgemäßen 2-Komponenten-Montageklebstoff erfüllen diese Anforderungen und zeichnen sich darüber hinaus durch eine gute Verstreichbarkeit (Rheologie) und ungewöhnlich hohe Endfestigkeit aus. Darüber hinaus sind sie deutlich emissionsärmer als entsprechende Lösemittelhaltige Montageklebstoffe.

Der erfindungsgemäße 2-Komponenten-Montageklebstoff eignet sich insbesondere als Klebstoff zum Verkleben von Substraten aus Kunststoff, Holz, Metall, Textilien aus gewebten und oder ungewebten Fasern, Estrich, Beton, Zementären Ausgleichsmassen oder Ausgleichsmassen auf Gipsbasis oder Keramik.

Ein weiterer Gegenstand der vorliegenden Erfindung ist daher auch die Verwendung eines erfindungsgemäßen 2-Komponenten-Montageklebstoffes zum Verkleben von Substraten aus Kunststoff, Holz, Metall, Textilien aus gewebten und oder ungewebten Fasern, Estrich, Beton, Zementären Ausgleichsmassen oder Ausgleichsmassen auf Gipsbasis oder Keramik.

### Beispiele:

### 1. Herstellung einer Komponente A

In eine Styrolacrylatdispersion mit einem Feststoffgehalt von 50 Gew.-% wurden Methylcelluloseether, Na-Citrat und Kreide in den nachfolgend aufgelisteten Mengen gegeben und verrührt.

| 50%ige Styrolacrylatdispersion DS 910 | |
|---|---|
| (Hersteller: Fa. Rhodia) | 37 Gew.-% |
| Verdickungsmittel (Typ:HDK T 30, Hersteller: Fa. Wacker) | 2,0Gew.-% |
| Methylcellulosederivat | 21 Gew.-% |
| Na-Citrat | 4 Gew.-% |
| Wasser | 36 Gew.-% |

### 2. Komponente B

Als Komponente B diente ein Montageklebstoff der folgenden Zusammensetzung:

| Styrolacrylatdispersion Rhoximat DS 910 | |
|---|---|
| (Hersteller: Fa. Rhodia) | 66 Gew.-% |
| Kreide | 30 Gew.-% |
| Verdickungsmittel | 3 Gew.-% |
| Pigment | 1 Gew.-% |

### 3. Test verschiedener Mischungsverhältnisse der Komponente A zu Komponente B (in Gewichtsprozenten) im 2-Komponentensystem:

| Nr. | Komponente A | Komponente B | Anfangshaftung [g/cm²] |
|---|---|---|---|
| 1 | 1 | 0 | 3 |
| 2 | 0 | 1 | 12 |
| 3 | 5 | 1 | 6 |
| 4 | 4 | 1 | 6 |
| 5 | 3 | 1 | 12 |
| 6 | 2 | 1 | 23 |
| 7 | 1 | 1 | 62 |
| 8 | 1 | 2 | 75 |
| 9 | 1 | 3 | 90 |
| 10 | 1 | 5 | 61 |
| 11 | 1 | 10 | 49 |
| 12 | 1 | 15 | 42 |
| 13 | 1 | 20 | 33 |

## Patentansprüche

1. 2-Komponenten-Montageklebstoff umfassend Komponenten A und B, worin Komponente A
- mindestens ein wasserlösliches Polysaccharid oder ein Gemisch aus zwei oder mehr wasserlöslichen Polysacchariden in einer Menge von 0,5 bis 50 Gew.-% bezogen auf das Gesamtgewicht der Komponente A,
- Wasser sowie
- eine die Löslichkeit mindestens eines in Komponente A vorliegenden wasserlöslichen Polysaccharids in Wasser verringernde, in Wasser dissoziierende Verbindung
und Komponente B
- Wasser
- gegebenenfalls eine die Löslichkeit mindestens eines in Komponente A vorliegenden wasserlöslichen Polysaccharids in Wasser verringernde in Wasser dissoziierende Verbindung und
- gegebenenfalls ein wasserlösliches Polysaccharid oder ein Gemisch aus zwei oder mehr wasserlöslichen Polysacchariden enthält,
wobei
- mindestens Komponente A oder Komponente B mindestens ein wasserunlösliches in Wasser dispergierbares synthetisches Polymerisat enthält und
- die Konzentration der in Wasser dissoziierenden Verbindung in Komponente A so hoch ist, dass die Löslichkeit mindestens eines der in Komponente A vorliegenden wasserlöslichen Polysaccharide verringert ist und
- die Konzentration der in Wasser dissoziierenden Verbindung in Komponente A und B insgesamt so hoch ist, dass die Löslichkeit mindestens eines der in Komponente A vorliegenden wasserlöslichen Polysaccharide nach Zusammenfügen der Komponenten A und B höher ist, als in Komponente A alleine.

2. Klebstoff nach Anspruch 1, **dadurch gekennzeichnet, dass** die Komponente A insgesamt 1 bis 25 Gew.-% eines wasserlöslichen Polysaccharids oder Polysaccharidderivats oder eines Gemischs zwei oder mehr wasserlösliche Polysacchariden oder Polysaccharidderivaten enthält.

3. Klebstoff nach Anspruch 1 oder 2, **dadurch gekennzeichnet, dass** die Polysaccharide oder Polysaccharidderivate ausgewählt sind aus der Gruppe der Cellulosen und Cellulosederivate oder Stärke und Stärkederivate.

4. Klebstoff nach einem der Ansprüche 1 bis 3, **dadurch gekennzeichnet, dass** die in Wasser dissoziierende Verbindung ausgewählt ist aus der Gruppe der Halogenide, Carbonate, Hydrogencarbonate, Phosphate, Phosphite, Sulfate, Sulfite, Citrate, Formiate oder Acetate.

5. Klebstoff nach einem der Ansprüche 1 bis 4, **dadurch gekennzeichnet, dass** die Komponente A von 1 bis 10 Gew.-% einer in Wasser dissoziierendenverbindung, bezogen auf das Gesamtgewicht der Komponente A, enthält.

6. Klebstoff nach einem der Ansprüche 1 bis 5, **dadurch gekennzeichnet, dass** er als wasserunlösliches in Wasser dispergierbares synthetisches Polymerisat ein Styrol/(Meth)acrylat-Copolymeres enthält.

7. Klebstoff nach einem der Ansprüche 1 bis 6, **dadurch gekennzeichnet, dass** Komponente A
- etwa 10 Gew.-% bis 40 Gew.-% eines wasserunlöslichen, in Wasser dispergierbaren Polymerisats
- etwa 0 Gew.-% bis etwa 20 Gew.-% Füllstoffe
- etwa 5 Gew.-% bis 70 Gew.-% Wasser,
- etwa 1 Gew.-% bis 50 Gew.-% eines wasserlöslichen Polysaccharids oder eines Gemischs aus zwei oder mehr wasserlöslichen Polysacchariden und
- etwa 1 bis 6 Gew.-% eines Metallsalzes enthält.

8. Klebstoff nach einem der Ansprüche 1 bis 6, **dadurch gekennzeichnet, dass** Komponente B
- 0 Gew.-% bis etwa 70 Gew.-% eines wasserunlöslichen in Wasser dispergierbaren Polymerisats,
- 0 Gew.-% bis etwa 50 Gew.-% eines Füllstoffs,
- 0,1 Gew.-% bis etwa 5 Gew.-% eines Verdickungsmittels (z.B. wasserlösliches Polysaccharid)
- etwa 29,9 Gew.-% bis etwa 99,9 Gew.-% Wasser enthält.

9. Verfahren zur Herstellung eines Klebstoffes gemäß einem der Ansprüche 1 bis 8, umfassend die Schritte
- Herstellen einer Komponente A durch Vermischen von Wasser, einer in Wasser dissoziierenden Verbindung, einem wasserlöslichen Polysaccharid oder Polysaccharidderivat oder einem Gemisch aus zwei oder mehr davon, gegebenenfalls einem wasserunlöslichem, in Wasser dispergierbaren Polymerisat und gegebenenfalls Zusatzstoffen
- Herstellen einer Komponente B durch Vermischen von Wasser, gegebenenfalls einer in Wasser dissoziierenden Verbindung, gegebenenfalls einem wasserlöslichen Polysaccharid oder Polysaccharidderivat oder einem Gemisch aus zwei oder mehr davon, gegebenenfalls einem wasserunlöslichem, in Wasser dispergierbaren Polymerisat und gegebenenfalls Zusatzstoffen und
- gegebenenfalls Vermischung der Komponenten A und B vor dem Auftrag des erfindungsgemäßen Montageklebstoffes auf die zu verklebenden Substratflächen.

10. Verfahren nach Anspruch 9, **dadurch gekennzeichnet, dass** die Komponenten A und B getrennt jeweils auf eine zu verklebende Substratfläche aufgebracht werden und die Komponenten A und B erst beim in Kontakt bringen der zu verklebenden Substratflächen miteinander vermischt werden.

11. Verwendung eines Klebstoffes gemäß einem der Ansprüche 1 bis 7 oder eines gemäß einem der Ansprüche 8 oder 9 hergestellten Klebstoffs zum Verkleben von Substraten aus Kunststoff, Holz, Metall, Textilien aus gewebten und oder ungewebten Fasern, Estrich, Beton, Zementären Ausgleichsmassen oder Ausgleichsmassen auf Gipsbasis oder Keramik

## Claims

1. Two-component assembly adhesive comprising components A and B, in which component A
- comprises at least one water-soluble polysaccharide or a mixture of two or more water-soluble polysaccharides in an amount of 0.5% to 50% by weight, based on the total weight of component A,
- water and
- a compound which dissociates in water and which reduces the solubility in water of at least one water-soluble polysaccharide present in component A
and component B comprises
- water,
- if desired, a compound which dissociates in water and which reduces the solubility in water of at least one water-soluble polysaccharide present in component A, and
- if desired, a water-soluble polysaccharide or a mixture of two or more water-soluble polysaccharides,
where
- at least component A or component B comprises at least one water-insoluble, water-dispersible synthetic polymer and
- the concentration in component A of the compound which dissociates in water is such that the solubility of at least one of the water-soluble polysaccharides present in component A is reduced, and
- the concentration in components A and B of the compound which dissociates in water, overall, is such that the solubility of at least one of the water-soluble polysaccharides present in component A is higher following the combining of components A and B than in component A alone.

2. Adhesive according to Claim 1, **characterized in that** component A overall contains 1% to 25% by weight of a water-soluble polysaccharide or polysaccharide derivative or of a mixture of two or more water-soluble polysaccharides or polysaccharide derivatives.

3. Adhesive according to Claim 1 or 2, **characterized in that** the polysaccharides or polysaccharide derivatives are selected from the group consisting of celluloses and cellulose derivatives and starch and starch derivatives.

4. Adhesive according to any one of Claims 1 to 3, **characterized in that** the compound which dissociates in water is selected from the group consisting of halides, carbonates, hydrogen carbonates, phosphates, phosphites, sulphates, sulphites, citrates, formates and acetates.

5. Adhesive according to any one of Claims 1 to 4, **characterized in that** component A contains from 1% to 10% by weight of a compound which dissociates in water, based on the total weight of component A.

6. Adhesive according to any one of Claims 1 to 5, **characterized in that** it comprises, as a water-insoluble, water-dispersible synthetic polymer, a styrene/(meth)acrylate copolymer.

7. Adhesive according to any one of Claims 1 to 6, **characterized in that** component A contains
- about 10% by weight to 40% by weight of a water-insoluble, water-dispersible polymer,
- about 0% by weight to about 20% by weight of fillers,
- about 5% by weight to 70% by weight of water,
- about 1% by weight to 50% by weight of a water-soluble polysaccharide or of a mixture of two or more water-soluble polysaccharides and
- about 1% to 6% by weight of a metal salt.

8. Adhesive according to any one of Claims 1 to 6, **characterized in that** component B contains
- 0% by weight to about 70% by weight of a water-insoluble, water-dispersible polymer,
- 0% by weight to about 50% by weight of a filler,
- 0.1% by weight to about 5% by weight of a thickener (e.g. water-soluble polysaccharide),
- about 29.9% by weight to about 99.9% by weight of water.

9. Process for producing an adhesive according to any one of Claims 1 to 8, comprising the steps of
- preparing a component A by mixing water, a compound which dissociates in water, a water-soluble polysaccharide or polysaccharide derivative or a mixture of two or more thereof, if desired a water-insoluble, water-dispersible polymer, and, if desired, additives,
- preparing a component B by mixing of water, if desired a compound which dissociates in water, if desired a water-soluble polysaccharide or polysaccharide derivative or a mixture of two or more thereof, if desired a water-insoluble, water-dispersible polymer and, if desired, additives, and
- if desired, mixing components A and B prior to the application of the assembly adhesive to the substrate surfaces to be bonded.

10. Process according to Claim 9, **characterized in that** components A and B separately are each applied to a substrate surface to be bonded, and components A and B are mixed with one another only during the contacting of the substrate surfaces to be bonded.

11. Use of an adhesive according to any one of Claims 1 to 7 or of an adhesive produced according to either of Claims 8 and 9 for adhesively bonding substrates made of plastic, wood, metal, textiles formed from woven and/or unwoven fibres, screed, concrete, cementitious levelling compounds or gypsum-based levelling compounds or ceramic.

## Revendications

1. Adhésif pour assemblage à deux composants comprenant les composants A et B, le composant A contenant
- au moins un polysaccharide soluble dans l'eau ou un mélange de deux polysaccharides solubles dans l'eau ou plus en une quantité de 0,5 à 50 % en poids, rapportés au poids total du composant A,
- de l'eau, et
- un composé se dissociant dans l'eau, réduisant la solubilité dans l'eau d'au moins un polysaccharide soluble dans l'eau présent dans le composant A,
et le composant B contenant
- de l'eau,
- le cas échéant, un composé se dissociant dans l'eau, réduisant la solubilité dans l'eau d'au moins un polysaccharide soluble dans l'eau présent dans le composant A, et
- le cas échéant, un polysaccharide soluble dans l'eau ou un mélange de deux polysaccharides solubles dans l'eau ou plus ;
- au moins le composant A ou le composant B contenant au moins un polymère synthétique insoluble dans l'eau, apte à être dispersé dans l'eau, et
- la concentration du composé se dissociant dans l'eau dans le composant A s'élevant à un point tel que la solubilité d'au moins un des polysaccharides solubles dans l'eau présents dans le composant A subit une réduction, et
- la concentration du composé se dissociant dans l'eau dans les composants A et B s'élevant de manière globale à un point tel que la solubilité d'au moins un des polysaccharides solubles dans l'eau présents dans le composant A, après assemblage des composants A et B est supérieure à celle en vigueur dans le composant A seul.

2. Adhésif selon la revendication 1, **caractérisé en ce que** le composant A contient au total à concurrence de 1 à 25 % en poids un polysaccharide ou un dérivé de polysaccharide soluble dans l'eau ou encore un mélange de deux polysaccharides ou de deux dérivés de polysaccharides solubles dans l'eau ou plus.

3. Adhésif selon la revendication 1 ou 2, **caractérisé en ce que** les polysaccharides ou les dérivés de polysaccharides sont choisis parmi le groupe des celluloses et des dérivés de la cellulose ou de l'amidon et des dérivés de l'amidon.

4. Adhésif selon l'une quelconque des revendications 1 à 3, **caractérisé en ce que** le composé se dissociant dans l'eau est choisi parmi le groupe des halogénures, des carbonates, des hydrogénocarbonates, des phosphates, des phosphites, des sulfates, des sulfites, des citrates, des formiates ou des acétates.

5. Adhésif selon l'une quelconque des revendications 1 à 4, **caractérisé en ce que** le composant A contient un composé se dissociant dans l'eau, à concurrence de 1 à 10 % en poids, rapportés au poids total du composant A.

6. Adhésif selon l'une quelconque des revendications 1 à 5, **caractérisé en ce qu'**il contient, à titre de polymère synthétique insoluble dans l'eau, apte à être dispersé dans l'eau, un copolymère de styrène/(méth)acrylate.

7. Adhésif selon l'une quelconque des revendications 1 à 6, **caractérisé en ce que** le composant A contient :
- à concurrence d'environ 10 % en poids à 40 % en poids, un polymère insoluble dans l'eau, apte à être dispersé dans l'eau ;
- des substances de charge à concurrence d'environ 0 % en poids à environ 20 % en poids ;
- de l'eau à concurrence d'environ 5 % en poids à 70 % en poids ;
- un polysaccharide soluble dans l'eau ou un mélange de deux polysaccharides solubles dans l'eau ou plus, à concurrence d'environ 1 % en poids à 50 % en poids ; et
- un sel métallique, à concurrence d'environ 1 à 6 % en poids.

8. Adhésif selon l'une quelconque des revendications 1 à 6, **caractérisé en ce que** le composant B contient :
- à concurrence de 0 % en poids à environ 70 % en poids, un polymère insoluble dans l'eau, apte à être dispersé dans l'eau ;
- une substance de charge à concurrence de 0 % en poids à environ 50 % en poids ;
- un épaississant (par exemple un polysaccharide soluble dans l'eau) à concurrence de 0,1 % en poids à environ 5 % en poids ;
- de l'eau à concurrence d'environ 29,9 % en poids à environ 99,9 % en poids.

9. Procédé pour la préparation d'un adhésif selon l'une quelconque des revendications 1 à 8, comprenant les étapes :
- de préparation d'un composant A par mélange d'eau, d'un composé se dissociant dans l'eau, d'un polysaccharide ou d'un dérivé de polysaccharide soluble dans l'eau ou encore d'un mélange de deux d'entre eux ou plus, le cas échéant d'un polymère insoluble dans l'eau, apte à être dispersé dans l'eau, et le cas échéant, d'additifs ;
- de préparation d'un composant B par mélange d'eau, le cas échéant d'un composé se dissociant dans l'eau, le cas échéant d'un polysaccharide ou d'un dérivé de polysaccharide soluble dans l'eau ou encore d'un mélange de deux d'entre eux ou plus, le cas échéant d'un polymère insoluble dans l'eau, apte à être dispersé dans l'eau, et le cas échéant d'additifs ;
- le cas échéant, de mélange des composants A et B avant l'application de l'adhésif d'assemblage selon l'invention sur les surfaces de substrats à coller.

10. Procédé selon la revendication 9, **caractérisé en ce que** les composants A et B sont appliqués de manière respectivement séparée sur une surface de substrats à coller, les composants A et B n'étant mélangés l'un à l'autre que lors de la mise en contact des surfaces de substrat à coller.

11. Utilisation d'un adhésif selon l'une quelconque des revendications 1 à 7, ou d'un adhésif préparé conformément à l'une quelconque des revendications 8 ou 9, pour le collage de substrats en matière synthétique, en bois, en métal, en textile de fibres tissées et/ou non tissées, en chape, en béton, en matériaux de nivellement cimentaires ou en matériaux de nivellement à base de gypse ou de céramique.
